# EUROPÄISCHE PATENTSCHRIFT

(11) **EP 2 624 421 B1**
(45) Veröffentlichungstag und Bekanntmachung des Hinweises auf die Patenterteilung: **25.01.2023**
(21) Anmeldenummer: 13000425.2
(22) Anmeldetag: 29.01.2013
(51) Int. Cl.: H02K 41/02

(54) **Linearachse mit elektrischem Antrieb und stromloser Endlagenfixierung**
Linear axis with electric drive and currentless fixation of the end position
Axe linéaire avec entraînement électrique et fixation de fin sans courant

(30) Priorität: 31.01.2012 DE 102012002247
(43) Veröffentlichungstag der Anmeldung: 07.08.2013
(73) Patentinhaber: Zimmer, Günther Stephan, 77866 Rheinau (DE); Zimmer, Martin Johannes, 77866 Rheinau (DE)
(72) Erfinder: Zimmer, Günther Stephan, 77866 Rheinau (DE); Zimmer, Martin Johannes, 77866 Rheinau (DE)
(74) Vertreter: Thämer, Wolfgang

(56) Entgegenhaltungen:
- EP-A1- 0 026 753
- DE-T2- 69 025 609
- US-A- 3 895 281
- US-A- 5 361 182

## Beschreibung

Die Erfindung betrifft eine elektrisch angetriebene Linearachse mit einer Endlagenhaltevorrichtung, wobei die Linearachse einen an einer Schlittenführung gelagerten verfahrbaren Schlitten aufweist, wobei zwischen deren Schlitten und deren Schlittenführung mindestens ein Halteaggregat und mindestens ein Halteglied angeordnet ist und wobei in mindestens einer festen oder einstellbaren Schlittenendlage mindestens ein Halteglied am Halteaggregat kraft und/oder formschlüssig - ohne extern zugeführte Fremdenergie - ankuppelbar ist.

U.a. aus dem Taschenbuch für Werkzeugmaschinen, Klaus-Jörg Conrad, Hanserverlag, 2. Auflage, 2006, Seite 208 ff. ist als Linearachse ein von einem Linearmotor angetriebener Schlitten bekannt. Auch im Stillstand wird der Linearmotor bestromt, um den Schlitten in seiner Halteposition unverrückbar zu halten. Um das zu ermöglichen, ist der Linearmotor in eine Lageregelung integriert. Damit benötigt der Antrieb auch im Stillstand viel Energie.

Die EP 0 026 753 A1 beschreibt eine Methode und eine Vorrichtung zur Beschriftung von auf einem Transportband zugeführten Gütern.

Die Beschriftungsvorrichtung ist oberhalb des Transportbandes angebracht. Sie besteht unter anderem aus einem mittels Linearantriebs auf- und abfahrbaren stempeltragenden Linearschlitten. Um den Stempel in seiner oberen Ruhelage zu fixieren, befindet sich am Gehäuse des Linearabtriebs ein Druckstück, das in eine Kerbe des Linearschlittens eingreift. Wird der Linearantrieb zur Einleitung der Abwärtsbewegung des Stempels bestromt, reicht die Schubkraft des Linearantriebs aus, die Sperrwirkung des Druckstücks aufzuheben.

Aus der US 5 361 182 A ist eine Vorrichtung zum Festsetzen der Leseköpfe eines elektromagnetischen Speichermediums in einer Parkstellung bekannt. Die HDD-Festplatten haben zum Schutz ihrer Leseköpfe und ihrer Zylinder diese Vorrichtung, die das Halten der die Leseköpfe tragenden Schwenkarme bei abgeschaltetem Lese- oder Schreibvorgang ermöglicht.

Die DE 690 25 609 T2 beschreibt eine magnetische Verriegelung für einen Plattenantriebsträger einer HDD-Festplatte. Dazu hat der die Leseköpfe tragende Schwenkarm an seiner Rückseite einen magnetischen Vorsprung, der zumindest in der inneren Schwenkarmendlage den Schwenkarm am Gehäuse magnetisch fixiert.

Die US3895281 offenbart eine Linearachse mit Endlagenhaltevorrichtung wobei die Achse formschlüssig in ihrer Endlage gehalten wird und die Abkupplung elektromotorisch erfolgt.

Der vorliegenden Erfindung liegt die Problemstellung zugrunde, eine Endlagenhaltevorrichtung für eine elektrisch angetriebene Linearachse zu entwickeln, die den Schlitten gegenüber der Schlittenführung in mindestens einer wählbaren Halteposition schnell, sicher und ohne Zuführung von Fremdenergie hält.

Diese Problemstellung wird mit den Merkmalen des Patentanspruchs 1 gelöst. Dazu ist bei einer kraftschlüssigen Kupplung das Halteglied am Halteaggregat mittels eines Permanentmagnetfelds ankuppelbar und das Halteglied ist vom Halteaggregat mittels eines elektrisch erzeugten Magnetfelds abkuppelbar. Bei einer formschlüssigen Kupplung ist das Halteglied vom Halteaggregat , piezoelektrisch oder durch Nutzung eines beheizbaren Formgedächtniselements abkuppelbar.

Die Endlagenhaltevorrichtung ist in Kombination mit der elektrisch angetriebenen Achse eine Vorrichtung, mit der sich eine regelmäßige, zyklisch immer wiederkehrende Maschinenschlittenbewegung mit einfachen und standardisierten technischen Mitteln realisieren lässt. Die Vorrichtung ist mit einem doppeltwirkenden Pneumatikzylinder vergleichbar, der sich - zumindest zeitweise - permanent zwischen seinen festen Endlagen hin und her bewegt. Der Pneumatikzylinder wird hierbei in seinen Endlagen durch das Halten des für die Verfahrbewegung erforderlichen Druckes der Druckluft fixiert. Im Analogieschluss muss bei einem elektrischen Linearantrieb der dem Pneumatikzylinder entsprechende elektrisch direkt angetriebene Schlitten durch ein Halten des Fahrstroms in der Endlage fixiert werden. Dies bedingt einen hohen Stromverbrauch und eine große Abwärmebelastung für die gesamte Vorrichtung.

Der Gegenstand der vorliegenden Druckschrift bietet mehrere Lösungen an, den Schlitten in festen oder einstellbaren Endlagen zu fixieren, ohne dass der den Schlitten antreibende Motor dauernd unter Strom gehalten werden muss. Eine Lösungsvariante stellt das kraftschlüssige Halten in der Endlage dar. Dabei fährt der Schlitten z.B. gesteuert oder geregelt gegen einen als Halteglied ausgebildeten Endanschlag. Ein an der Schlittenführung in einem Halteaggregat angeordneter Permanentmagnet kontaktiert ein aus einem magnetischen oder magnetisierbaren Werkstoff hergestelltes Halteglied, so dass das Halteaggregat am Halteglied magnetisch haftet. Zum Lösen dieser kraftschlüssigen Kupplung wird eine im Halteaggregat angeordnete elektrische Spule so bestromt, dass zumindest kurzzeitig die Magnetkraft des Halteaggregats im Bereich des angekuppelten Halteglieds zumindest großteils aufgehoben wird.

In anderen Ausführungsbeispielen wird der Schlitten in mindestens einer seiner Endlagen formschlüssig durch ein Verrasten an einem Halteaggregat angekuppelt. Die Entrastung ist piezoelektrisch oder durch Nutzung eines beheizbaren Formgedächtniselements verwirklicht. Selbstverständlich können auch das oder die Halteglieder mit dem Halteaggregat die Plätze tauschen, so dass mindestens ein Halteaggregat am Schlitten und mindestens ein Halteglied an der Schlittenführung angeordnet ist.

Die Endlagenhaltevorrichtung ist im Ausführungsbeispiel für eine Linearführung beschrieben. Anstelle der geradlinigen Schlittenführung kann auch eine in der Ebene oder im Raum gekrümmte Führung gewählt werden. Eine denkbare Bahnkurve wäre eine Kreisbahn.

Weitere Einzelheiten der Erfindung ergeben sich aus den Unteransprüchen und der nachfolgenden Beschreibung einer schematisch dargestellten Ausführungsform.
- Figur 1:: Ansicht eines auf einem Führungsgehäuse gelagerten Schlittens, der eine Endlagenhaltevorrichtung aufweist und z.B. zwei Zweifingergreifer trägt;
- Figur 2:: wie Figur 1, jedoch ohne die Fingergreifer und ohne das Gehäuse der Endlagenhaltevorrichtung ;
- Figur 3:: Teillängsschnitt durch die Kombination aus Führungsgehäuse und Schlitten;
- Figur 4:: Teilquerschnitt zu Figur 3 im Bereich eines Kugelumlaufschuhes;
- Figur 5:: wie Figur 2, jedoch mit an einer Stange gelagerten Halteelementen;
- Figur 6:: magnetisches Halteaggregat im Längsschnitt;
- Figur 7:: Draufsicht auf das Halteaggregat;
- Figur 8:: Polplatte des Halteaggregats;
- Figur 9:: magnetisches Halteaggregat mit magnetisierbarem Halteglied;
- Figur 10:: magnetisches Halteaggregat mit mehreren Spulen;
- Figur 11:: Kombination aus Führungsgehäuse und Schlitten, mit einer auf einem Hubmagnet basierenden Endlagenhaltevorrichtung;
- Figur 12:: Halteaggregat nach Figur 11 in Halteposition;
- Figur 13:: Halteglied mit Wälzlager;
- Figur 14:: wie Figur 11, jedoch mit Rastkeilen an den Haltegliedern;
- Figur 15:: Halteaggregat nach Figur 14 in Halteposition.

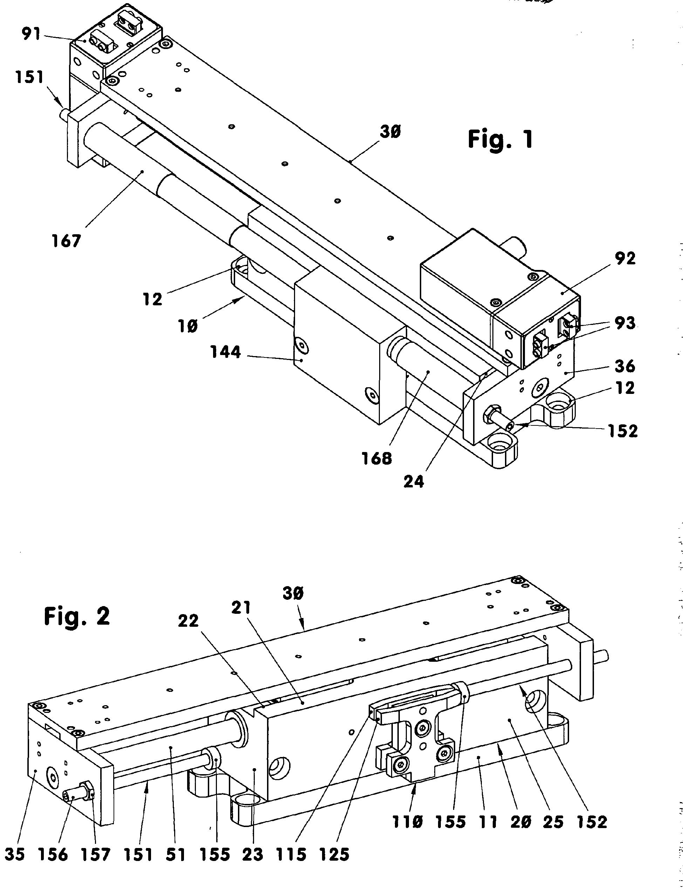

Die Figur 1 zeigt einen auf einer Schlittenführung, z.B. einem ortsfesten Führungsgehäuse (10), verfahrbaren Schlitten (30), der im Bereich seiner Enden z.B. jeweils einen Zweifingergreifer (91, 92) trägt. Jeder Zweifingergreifer (91, 92) hat zwei Greiferträger (93), an die jeweils an die Greifaufgabe angepasste Greiferfinger montiert werden.

Die Kombination aus dem Führungsgehäuse (10) und dem Schlitten (30) weist eine Endlagenhaltevorrichtung auf. Letztere besteht aus einem am Führungsgehäuse (10) in einem eigenen Gehäuse (144) angeordneten aktiven Halteaggregat (110) und zwei passiven Haltegliedern (151, 152), vgl. Figur 2.

Das Führungsgehäuse (10) besteht gemäß dem Ausführungsbeispiel aus einer Grundplatte (11) und einer darauf aufgesetzten und verschraubten Gehäusehaube (20). Die Grundplatte (11) dient der Befestigung des Führungsgehäuses (10) am Maschinenbett. Sie hat dazu vier Befestigungslaschen (12). Jede Befestigungslasche (12) ist mit einer Zylindersenkbohrung ausgestattet.

Die Gehäusehaube (20) ist im Wesentlichen ein einseitig offener Körper, der eine obere Deckfläche (21) und vier Stirn- bzw. Seitenflächen (23, 24, 25) aufweist. Die vordere (23) und die hintere Stirnfläche (24) hat jeweils eine Durchgangsbohrung (26) mit eingesetzter Gleitlagerhülse (27). Die obere Deckfläche (21) weist zwei rechtecknutartige Einfräsungen (22) auf, in denen jeweils ein Kugelumlaufschuh (29) angeordnet ist.

Im Führungsgehäuse (10) ist ein Linearmotor (40) untergebracht. Letzterer besteht aus einem ortsfesten Stator (41) und einem zylindrischen Läufer (51). Der Stator (41) ist so im Führungsgehäuse (10) angeordnet, dass seine zentrale Bohrung (43) mit den Bohrungen der Gleitlagerhülsen (27) fluchtet. Der Läufer (51) ist ein fester Bestandteil des Schlittens (30).

Der Schlitten (30) umfasst im Wesentlichen eine Trägerplatte (31), zwei Stirnplatten (35, 36), eine in einer Längsnut (32) der Unterseite der Trägerplatte (31) angeordnete Führungsschiene (39) und jeweils ein an jeder Stirnplatte (35, 36) befestigtes Halteglied (151, 152). Die Stirnplatten (35, 36) sind an den Enden der Trägerplatte (31) angeschraubt. Zwischen den Stirnplatten (35, 36) ist der Läufer (51) so befestigt, dass er parallel zur Trägerplatte (31) und der daran angeordneten Führungsschiene (39) ausgerichtet ist.

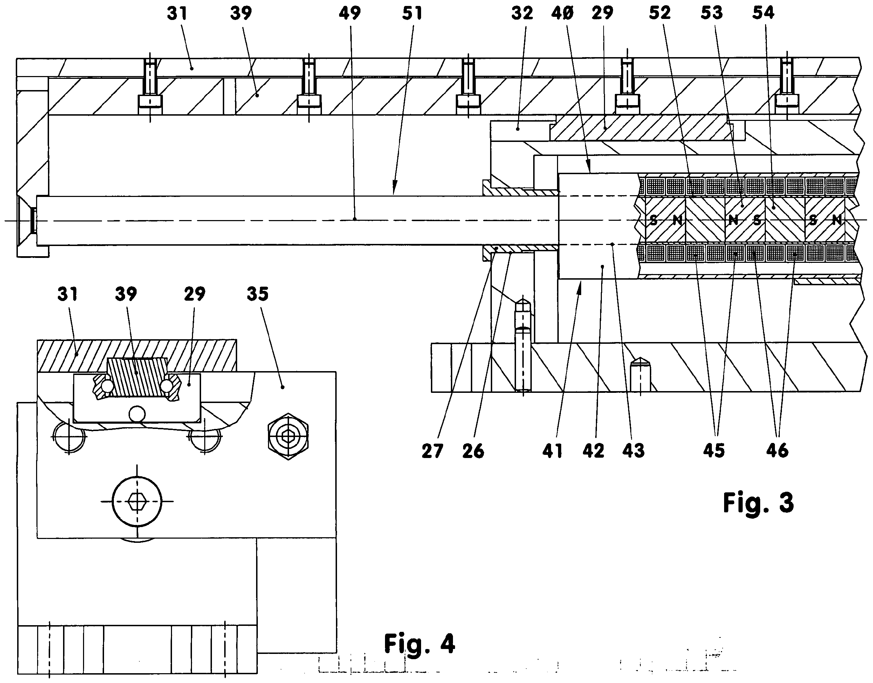

In Figur 3 ist der Linearmotor (40) teilweise im Schnitt dargestellt. Sein Läufer (51) besteht aus zylinderförmigen, abwechselnd hintereinander angeordneten Permanentmagneten (53) und Weicheisenbolzen (54), die z.B. in ein Edelstahlrohr (52) eingepasst sind. Die stabförmigen Permanentmagnete (53) sind entlang der Mittellinie (49) des Linearmotors (40) gepolt, wobei bei jeweils zwei durch einen Weicheisenbolzen (54) getrennte Permanentmagnete (53) sich jeweils die gleichen Pole gegenüber liegen. Im Gehäuse (42) des Stators (41) sind zwei Sätze Spulen (45, 46) und eine Ansteuerelektronik - hier nicht dargestellt - untergebracht. Die Spulen (45, 46) eines jeden Satzes umgeben den Läufer (51) ringförmig, wobei zwischen der jeweiligen Spule (45, 46) und dem Läufer (51) ein Luftspalt von ca. 0,1 mm existiert. Im Statorgehäuse (41) wechseln sich die Spulen (45, 46) der ersten und der zweiten Phase jeweils ab. Durch das gesteuerte abwechselnde Bestromen der einzelnen Spulensätze schiebt das elektrisch erzeugte Magnetfeld des Stators (41) den Läufer (51) mit seinem Permanentmagnetfeld vor sich her.

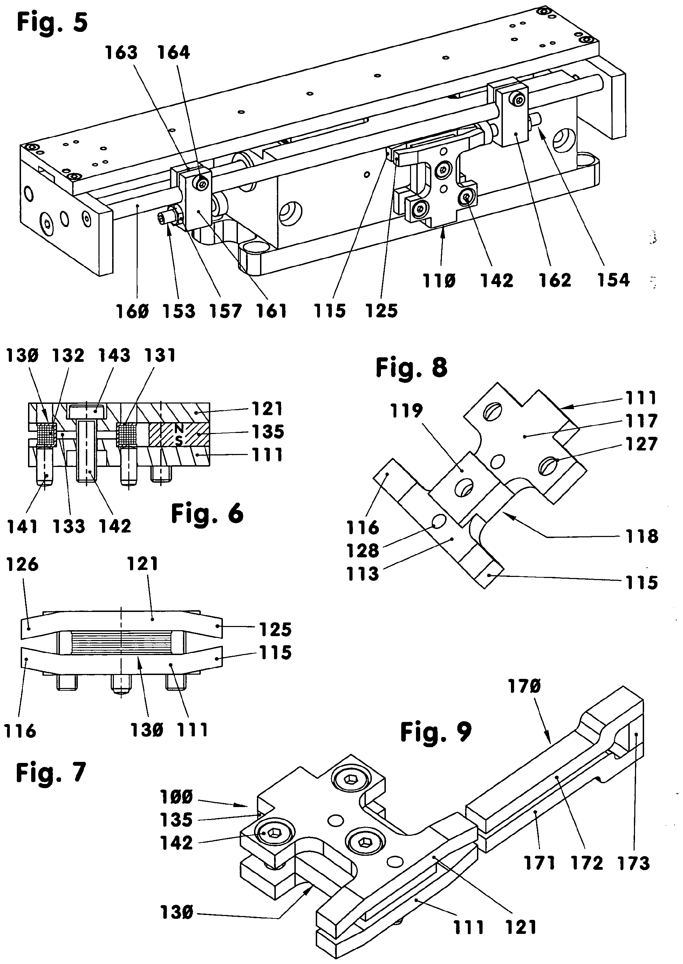

An der Vorderseite (25) der Gehäusehaube (20) ist nach Figur 2 und 5 das magnetische Halteaggregat (110) der Haltevorrichtung angeordnet. Das z.B. doppelseitig wirkende Halteaggregat (110) besteht im Wesentlichen aus zwei Polplatten (111, 121), einem Permanentmagnet (135) und einer Spule (130). Beide Polplatten (111, 121) sind spiegelsymmetrisch aufgebaut. Nach Figur 8 ist die Polplatte (111, 121) aus zwei Längsstegen (113, 117) und einem Quersteg (118) aufgebaut, die zusammen zumindest annähernd z.B. ein "H" bilden. Der längere Längssteg (113) ist der Polsteg. Nach Figur 7 ist er in seinen Endbereichen z.B. um 11 Winkelgrade abgewinkelt. Der kürzere und breitere Längssteg (117) ist der Magnethaltesteg. Zwischen den Stegen (113, 117) erstreckt sich der Quersteg (118), der u.a. zur formschlüssigen Fixierung des eine Wicklung (132) tragenden Spulenkörpers (131) der Spule (130) in Figur 8 nach oben hin verbreitert ist, vgl. auch Figur 6. Die Verbreiterung (119) ragt in den Spulenkörper (131) hinein, so dass sich dort die Verbreiterungen (119) beider Polplatten (111, 121) fast kontaktieren. Die abgewinkelten Endbereiche (115, 116; 125, 126) der Polstege (113) sind nach der Montage so orientiert, dass sie nach Figur 7 an der engsten Stelle einen, einen Spalt (133) bildenden Abstand von z.B. 2 mm haben.

Jede Polplatte (111, 121) hat drei große (127) und zwei kleine Durchgangsbohrungen (128). Die drei großen Bohrungen (127) haben von der Außenseite her zwei Zylindersenkungen. über diese Bohrungen wird das Halteaggregat (110) im zusammengefügten Zustand an der Gehäusehaube (20) mittels versenkten Zylinderschrauben (142) befestigt. Letztere sind z.B. Passschrauben, die die beiden Polplatten (111, 121) gegenseitig zentrieren. In die kleineren Bohrungen (128) der unteren Polplatte (111) werden au-βen zwei Passstifte (141) eingesetzt, um das Halteaggregat (110) an der Gehäusehaube (20) auszurichten.

Im montierten Zustand sind zwischen den beiden Polplatten (111, 121) hinten ein Permanentmagnet (135) und vorne die Spule (130) eingeklemmt. Der nach Figur 6 im Bereich der Spule (130) vorhandene Spalt (133) zwischen den Polplatten (111, 121) kann mit einem nichtmagnetisierbaren Distanzstück zum Schutz der Spule (130) ausgefüllt werden. Ggf. ist das Distanzstück eine Teil des aus Kunststoff gefertigten Spulenkörpers (131).

Die Pole des Permanentmagneten (135) sind senkrecht zur flächigen Ausdehnung der Polplatten (111, 121) orientiert. Folglich liegt nach Figur 6 z.B. an der oberen Polplatte (121) der Nordpol an, während der Südpol flächig die untere Polplatte (111) kontaktiert. Da die Polplatten (111, 121) aus einem ferromagnetischen Material gefertigt sind, setzt sich der Nordpol des Permanentmagnets (135) bis in die abgewinkelten Endbereiche (125, 126) des oberen Längssteges (113) fort. Dementsprechend sind die Endbereiche (115, 116) des unteren Längsstegs (113) Südpole.

Für die gepaarten Pole (115, 125; 116, 126) der Polplatten (111, 121) bildet das jeweilige Ende eines Halteglieds (151, 152, 153, 154), vgl. Figuren 2 und 5, jeweils einen magnetischen Anker, sobald der Schlitten (30) in seine entsprechende Endlage gelangt. Nach Figur 2 sind die Halteglieder (151, 152) lange Bolzen, die parallel zum Läufer (51) ausgerichtet sind und jeweils an ihrem einen Ende eine kreisrunde Scheibe (155) und an ihrem anderen Ende ein Gewinde (156) tragen. Die jeweilige Scheibe (155) ist Führungsanschlag und Anker zugleich.

Über das jeweilige Gewinde (156) ist das entsprechende Halteglied (151, 152, 153, 154) in eine Gewindebohrung der sie tragenden Stirnplatte (35, 36) verstellbar eingeschraubt. Um ein sicheres Halten zu gewährleisten, ist auf das freie Ende des einzelnen Gewindes (156) eine Kontermutter (157) aufgeschraubt. Die Halteglieder (151, 152) sind feinjustierbare, den Schlittenhub begrenzende Anschläge. Zum Schutz vor Schmutz, insbesondere vor magnetisierbaren Staub oder Spänen, sind die Halteglieder (151, 152) z.B. von Teleskopschutzrohren (167, 168) umgeben. Letztere sind zwischen den Stirnplatten (35, 36) des Schlittens (30) und dem an der Schlittenführung (10) montierten Gehäuse (144) angeordnet und befestigt.

Nach Figur 5 sind die langen Halteglieder durch kurze (153, 154) ersetzt. Die kurzen Halteglieder, die sich vom Aufbau der langen nur durch einen kürzeren Schaft unterscheiden, sind über Klemmelemente (161, 162) an einer zum Läufer (51) parallel ausgerichteten Anschlagträgerstange (160) befestigt. Die Anschlagträgerstange (160) ist an ihren Enden mit den Stirnplatten (35, 36) verschraubt.

Die Klemmelemente (161, 162) sind quaderförmige Klötze mit drei Bohrungen und einem Klemmschlitz (163). Eine erste und eine zweite Bohrung verlaufen parallel zueinander. In die erste, grö-βere Bohrung, über die das Klemmelement (161, 152) auf der Anschlagträgerstange (160) sitzt, mündet der Klemmschlitz (163). Quer zum Klemmschlitz (163) ist die dritte Bohrung angeordnet, die nach Figur 5 hinter dem Klemmschlitz (163) ein Innengewinde aufweist. In das Innengewinde ist eine Klemmschraube (164) eingeschraubt. In die zweite Bohrung, die unterhalb der ersten angeordnet ist und ein Innengewinde aufweist, ist jeweils das entsprechende Halteglied (153, 154) eingeschraubt.

Kontaktiert nun der Schlitten (30) mit der Scheibe (155) eines Haltegliedes (151-154) die Endbereiche (115, 116; 125, 126) der Polplatten (111, 121) des Halteaggregates (110), bildet die einzelne Scheibe (155) einen magnetischen Anker, wobei beim Ausführungsbeispiel eine Haltekraft von ca. 200 N zwischen der jeweiligen Scheibe (155) und den Polen (115, 116; 125, 126) entsteht. Die jeweilige Scheibe (155) schließt als magnetischer Anker - und als Ersatz der Luftstrecke - die Feldlinien zwischen den benachbarten, gepaarten Endbereichen (115, 116; 125, 126) bzw. Polen beider Polplatten (111, 121).

Das Ausbilden der Feldlinien entsteht durch das Anlegen der Polplatten (111, 121) an den Permanentmagnet (135), vgl. Figur 6. Dort liegt die obere Polplatte (121) am Nordpol des Magnets (135) an. Der Südpol ist zur unteren Polplatte (111) hin orientiert. Vor dem Kontakt mit dem Magnet (135) existieren in den Polplatten (111, 121) unzählige Kristallbereiche gleicher Magnetisierung. Diese Kristallbereiche, die Weiss'schen Bezirke, sind zunächst regellos in den Polplatten (111, 121) verteilt. Durch den Zusammenbau mit dem Magnet (135) nimmt die Mehrzahl der Weiss'schen Bezirke die gleiche Feldrichtung ein, so dass sich diese Bezirke vergrößern. In der Folge verlaufen die Feldlinien in der oberen Polplatte (121) vom Nordpol des Magnets (135) zum Pol (126), von dort über die Luftstrecke zum Pol (116) und von da in der unteren Polplatte (111) zurück zum Südpol des Magnets (135).

Um nun die magnetische Wirkung bzw. die Feldlinien an den Polen (115, 116; 125, 126) des Halteaggregats (110) aufzuheben oder zumindest stark zu schwächen, müssen die Feldlinien unterbrochen werden. Dies geschieht durch ein Bestromen der Spule (130), vgl. Figur 6. Bei einer kurzfristigen Bestromung, die Bestromungsdauer liegt z.B. zwischen 0,1 und 0,5 Sekunden, erzeugt die Spule (130) ein Magnetfeld, dessen Nordpol im Bereich des Schraubenkopfes (143) der Schraube (142) liegt. Beim Aufbau dieses Magnetfeldes wechselt ein größerer Teil der Kristallbereiche seine magnetische Orientierung, so dass in den Polplatten (111, 121) zumindest bereichsweise ein unmagnetischer Materialzustand erzielt wird. Die Feldlinien in den Polplatten (111, 121) brechen auf. Die Gegenfeldstärke des elektrisch erzeugten Magnetfeldes muss hierfür mindestens die sogenannte Koerzitivfeldstärke erreichen.

Sollten jedoch der Schlittenantrieb (40) und die Bestromung der Spule (130) zeitgleich erfolgen und zugleich die Vortriebskraft des Schlittenantriebs (40) größer sein als die Haltekraft des Halteaggregats (110) - ohne die Bestromung der Spule (135) - , kann die Feldstärke der Spule (135) kleiner sein als die Koerzitivfeldstärke. In diesem Fall kann auch die erforderliche Flussdichte im Spulenbereich kleiner sein als im Bereich des Permanentmagneten.

Während der regulären Bestromung haben die Pole (115, 116; 125, 126) kurzfristig keine magnetische Anziehungskraft. In diesem Augenblick kann der Schlitten (30) ohne eine stark erhöhte Anfahrkraft aufzubringen, die Halteposition verlassen. Nach dem Abschalten baut der Permanentmagnet (135) die Feldlinien in den Polplatten (111, 121) wieder auf, so dass die Pole (115, 116; 125, 126) wieder magnetisch werden. Ihre Haltekraft gegenüber einem z.B. aus einem Weicheisenwerkstoff gefertigten Halteglied (151-154) beträgt beim Ausführungsbeispiel 200 N.

Um im Bedarfsfall die Haltekraft ohne das Verwenden eines zusätzlichen Permanentmagnets zu erhöhen, kann die Spule (130) nach dem Abkuppeln vom Halteglied (151-154) kurzzeitig gegenbestromt werden. In diesem Fall bildet sich im Bereich des Schraubenkopfes (143) ein Südpol aus. Durch einen erhöhten Gegenstrom wird das gemeinsame Ausrichten des größten Teils der Weiss'schen Bezirke bewirkt, so dass die Feldliniendichte in den Polplatten (111, 121) zunimmt. In der Folge bildet sich an den Polen (115, 116; 125, 126) nach dem Abschalten der Gegenbestromung eine höhere Haltekraft aus. Die Vergrößerung der Haltekraft beträgt im Ausführungsbeispiel mindestens 10 Prozent.

Nach Figur 9 wird als Halteglied (170) eine Kombination aus zwei gekröpften Polstäben (171, 172) und einem kleinen Permanentmagnet (173) verwendet. Der Südpol des Permanentmagnets (173) liegt hier oben. Auch in diesem Fall ergibt sich eine erhöhte Haltekraft gegenüber den regulären Haltegliedern (151-154). Allerdings muss zum Abkuppeln in der Spule (130) des Halteaggregats (110) eine Feldstärke erzeugt werden, die erheblich größer als die Koerzitivfeldstärke ist. Die Feldstärke muss so groß sein, dass sich an den Polen (125, 126) der oberen Polplatte (121), vgl. Figur 7, Südpole und an den Polen (115, 116) der unteren Polplatte (111) Nordpole ausbilden. Auf diese Weise wird das entsprechende Halteglied (170) bei einem Bestromen der Spule (130) abgestoßen. Dadurch erhöht sich zusätzlich die Anfahrbeschleunigung des Schlittens (30).

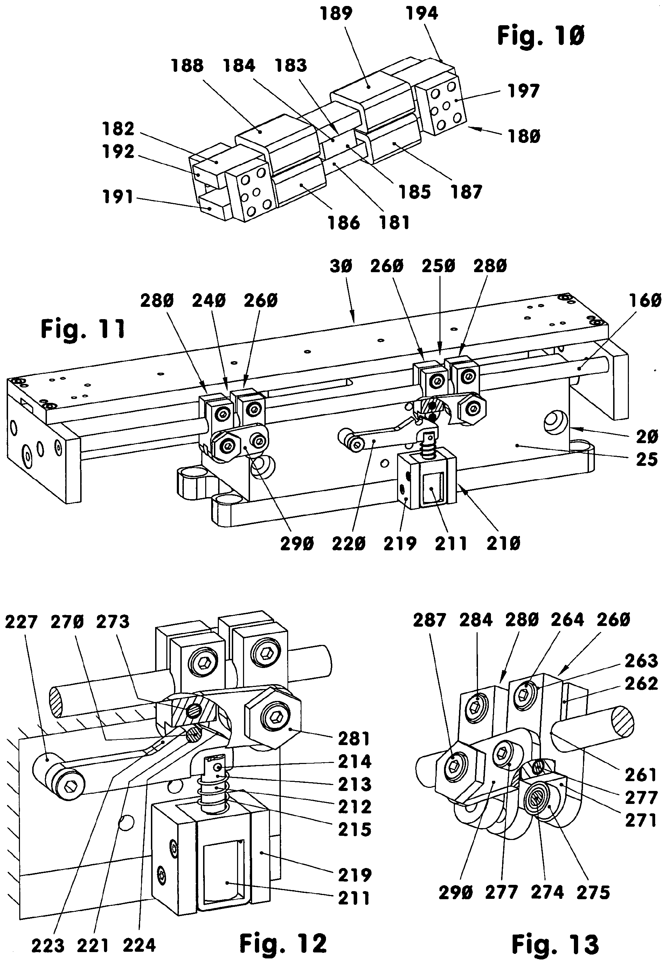

Figur 10 zeigt ein weiteres doppelseitig wirkendes Halteaggregat (180), das vier elektrische Spulen (186-189) aufweist. Im Zentrum des Halteaggregats (180) befindet sich zwischen zwei vierkantstabförmigen Polplatten (181, 182) ein Permanentmagnet (183), dessen nach oben weisende Fläche einen Nordpol (184) darstellt. An den freien Enden, den Polen, sind die Polplatten (181, 182) mit Hilfe von vier nichtmagnetisierbaren Montageplatten (197) verbunden. Zwischen den Montageplatten (197) und dem Magnet (183) sind auf jeder Polplatte (181, 182) zwei Spulen (186, 187; 188, 189) aufgesetzt. Das elektrisch erzeugte Magnetfeld aller Spulen (186-189) verläuft parallel zur jeweiligen Längsausdehnung der tragenden Polplatte (181, 182). Zum Abschalten der Magnetkraft der Pole (191, 192) bzw. (193, 194) werden die beiden Spulen (186, 188) bzw. (187, 189) - wie schon bei dem vorherigen Ausführungsbeispiel - kurzzeitig bestromt. Hier sind die Nordpole der beiden oberen Spulen (188, 189) dem

Permanentmagnet (183) zugewandt, während die beiden unteren Spulen (186, 187) ihre Südpole dem Magnet (183) zuwenden.

Die Endlagenhaltevorrichtungen nach den Figuren 11 bis 15 zeigen zwei verschiedene, nicht beanspruchte Rastsperren (210, 310), deren Sperrwirkung elektromagnetisch aufhebbar ist. In der jeweiligen Sperrstellung wird der Schlitten (30) am Führungsgehäuse (10) formschlüssig gehalten.

Bei der Variante nach den Figuren 11 bis 12 dient als beweglicher Sperrer ein an der Gehäusehaube (20) schwenkgelagerter Schwenkhebel (220), während am Schlitten (30) für jede Schlittenendlage ein z.B. feineinstellbares bolzenartiges Sperrstück (270) an einer zum Läufer (51) parallelen Anschlagträgerstange (160) angeordnet ist. Der Schwenkhebel (220) hat eine Rastnut (221) oder Rastkerbe, die in jeder Schlittenendlage einen in die Rastnut (221) passenden vom Schlitten (30) getragenen Rastbolzen (270) aufweist.

Der elektromagnetisch ansteuerbare Schwenkhebel (220) ist im Wesentlichen z.B. ein Vierkantstab, der im verrasteten Zustand, vgl. Figur 12, parallel zum Läufer (51) orientiert ist. Er weist an seinem linken Ende eine Bohrung auf, die z.B. gleitgelagert auf einem eingeschraubten Schwenkbolzen (227) gelagert ist. Die Mittellinie des Schwenkbolzens (227) ist lotrecht zur Oberfläche der vorderen Seitenfläche (25) der Gehäusehaube (20) ausgerichtet. An rechten Ende des Schwenkhebels (220) befindet sich an dessen Oberseite die Rastnut (221), die zwischen zwei Rastrampen (223, 224) angeordnet ist. Die Rastrampen (223, 224) haben jeweils einen Steigungswinkel von 30 Winkelgraden. Unterhalb der rechten Rastrampe (224) weist der Schwenkhebel (220) ein Langloch auf, dessen Längsausdehnung parallel zur Längsausrichtung des Schwenkhebels (220) orientiert ist.

Unterhalb des Schwenkhebels (220) und mittig unterhalb des Langlochs ist in einem c-förmigen Träger (219) ein Hubmagnet (211) angeordnet. Der Hubmagnet (211) hat einen Zuganker (212), dessen Mittellinie nach Figur 11 senkrecht zur Anschlagträgerstange (160) und parallel zur vorderen Seitenfläche (35) ausgerichtet ist. Der Zuganker (212), vgl. Figur 12, hat ein gabelförmiges Ende, dessen Gabelzinken (213) das rechte Ende des Schwenkhebels (220) umgreifen. Beide Gabelzinken (213) lagern einen quer zur Zugankermittellinie liegenden Bolzen (214), der das vom vorderen Gabelzinken verdeckte Langloch am rechten, unteren Ende des Schwenkhebels (220) durchdringt. Auf dem Zuganker (212) ist zwischen der Unterseite des Schwenkhebels (220) und der Oberseite des Hubmagnets (211) eine Schraubendruckfeder (215) angeordnet, die den Schwenkhebel (220) - zusammen mit dem entsprechenden Endanschlag des Hubmagnets (211) - bei unbetätigtem Hubmagnet (211) in der waagerechten Lage hält.

Der Rastbolzen (270), vgl. Figur 12, ist Teil eines Rastklemmschuhes (260), der zusammen mit einem Justierklemmschuh (280) zweimal paarweise auf der Anschlagträgerstange (160) angeordnet ist. Der Rast- und der Justierklemmschuh (260, 280) haben jeweils ca. mittig eine Querbohrung (261), über die sie nebeneinander auf der Anschlagträgerstange (160) sitzen. In die Querbohrung (261) mündet von oben her ein mittiger Klemmschlitz (262), der parallel zur Mittellinie der Querbohrung (261) und senkrecht zur Mittellinie einer Klemmbohrung (263) angeordnet ist. Die Klemmbohrung (263) durchquert den Rast- und den Justierklemmschuh (260, 280) ca. mittig zu dem jeweiligen Klemmschlitz (262). Vor dem Klemmschlitz (262) ist sie eine Durchgangsbohrung mit einer Zylindersenkung und hinter dem Schlitz ein Durchgangsgewinde. Mittels einer in die Klemmbohrung (263) eingeschraubten Schraube (264, 284) kann der Rast- und der Justierklemmschuh (260, 280) an der Anschlagträgerstange (160) festgeklemmt werden.

Das untere Ende des Rast- und des Justierklemmschuhes (260, 280) weist einen Rastschlitz (271) auf, der parallel zum Klemmschlitz (262) orientiert ist. Er endet ca. 10 mm vor der Anschlagträgerstange (160). Quer zum Rastschlitz (271) ist eine Bohrung angeordnet, in der verklemmt der Rastbolzen (270) sitzt. Zwischen dem Rastschlitz (271) und der Querbohrung (261) befindet sich im Rast- und im Justierklemmschuh (260, 280) eine zur Klemmbohrung (263) parallele Gewindebohrung (273), in der jeweils eine Gelenkschraube (264, 284) eingeschraubt ist. Die beiden Gelenkschrauben (264, 284) des Rast- und des Justierklemmschuhes (260, 280) lagern gelenkig eine Koppellasche (290). Letztere ist im Wesentlichen parallel zur Anschlagträgerstange (160) ausgerichtet.

Nach Figur 12 ist zwischen der im Justierklemmschuh (280) eingeschraubten Gelenkschraube (287) und der entsprechenden Bohrung der Koppellasche (290) eine mit einem Sechskantflansch ausgestattete Exzenterhülse (281) eingelegt. Bei einem lose auf der Anschlagträgerstange (160) sitzenden Rastklemmschuh (260) und einem auf der Anschlagträgerstange (160) festsitzenden Justierklemmschuh (280) kann durch ein Verdrehen der Exzenterhülse (281) über deren Sechskantflansch der Abstand zwischen den beiden Klemmschuhen (260, 280) feinjustiert werden. Nach der Feinjustage wird auch die Klemmschraube (264) des Rastklemmschuhes (260) angezogen.

Verfährt nun der Schlitten (30) nach Figur 11 in die linke Endlage, kontaktiert der Rastbolzen (270) zunächst die rechte Rastrampe (224) des Schwenkhebels (220). Durch die entstehende Keilgetriebewirkung zwischen dem Rastbolzen (270) und der Rastrampe (224) wird der Schwenkhebel (220) um wenige Winkelgrade im Uhrzeigersinn geschwenkt. Sobald der sich seitwärts bewegende Rastbolzen (270) das obere Ende der Rastrampe (224) erreicht hat, springt der Rastbolzen (270) in die Rastnut (221) des Schwenkhebels (220). Hierbei schwenkt der Schwenkhebel (220) entgegen dem Uhrzeigerdrehsinn. Nun kontaktiert der Rastbolzen (270) formschlüssig die Rastnut (221). Der Schlitten (30) ist gegenüber dem Führungsgehäuse (10) in der linken Endlage blockiert.

Um den Schlitten (30) wieder freizugeben, wird der Hubmagnet (211) z.B. wenige Sekunden lang bestromt. Hierdurch wird der Zuganker (212) unter einem Verschwenken des Schwenkhebels (220) im Uhrzeigerdrehsinn und einem Spannen der Schraubendruckfeder (215) in das Hubmagnetgehäuse hineingezogen. Sobald der Schlitten (30) sich wenige Millimeter bewegt hat, wird die Bestromung des Hubmagnets (211) wieder abgeschaltet.

Nach Figur 13 ist in dem Rastschlitz (271) des Rastklemmschuhes (260) als Sperrstück anstelle des Rastbolzens (270) eine Achse (274) mit einem darauf gelagerten Rillenkugellager (275) angeordnet. Entsprechend dem Außendurchmesser des Rillenkugellagers (275) muss für diesen Rastklemmschuh (260) die Rastnut (221) des Schwenkhebels (220) vergrößert werden. Bei dieser Lösungsvariante wird die zwischen den Rastrampen (224, 224) und dem Rastbolzen (270) auftretende Gleitreibung durch Rollreibung ersetzt.

In Figur 11 sind auf der Anschlagträgerstange (160) zwei passive Halteglieder (240) und (250) angeordnet. Selbstverständlich können dort auch drei oder mehr Halteglieder montiert werden, um z.B. pro Schlittenhub mehrere Parkpositionen - mit einer Schlittenfixierung - anfahren zu können. Dies gilt auch für die anderen Ausführungsbeispiele. Werden bei der Verwendung von magnetischen Halteaggregaten, vgl. (110, 180) mehr als zwei Parkpositionen vorgesehen, werden die Stirnflächen der kuppelnden Polpaare, vgl. z.B. (115, 125) oder (116, 126), senkrecht zur Schlittenverfahrrichtung ausgerichtet. In diesem Fall fahren die ankerartigen vom Schlitten (30) getragenen Halteglieder tangential in minimalem Abstand, z.B. 0,05 mm, an den magnetischen Polpaaren des Halteaggregats vorbei. Sobald das jeweilige Halteglied auf der Höhe mindestens eines magnetischen Polpaares steht, ist eine Parkposition erreicht.

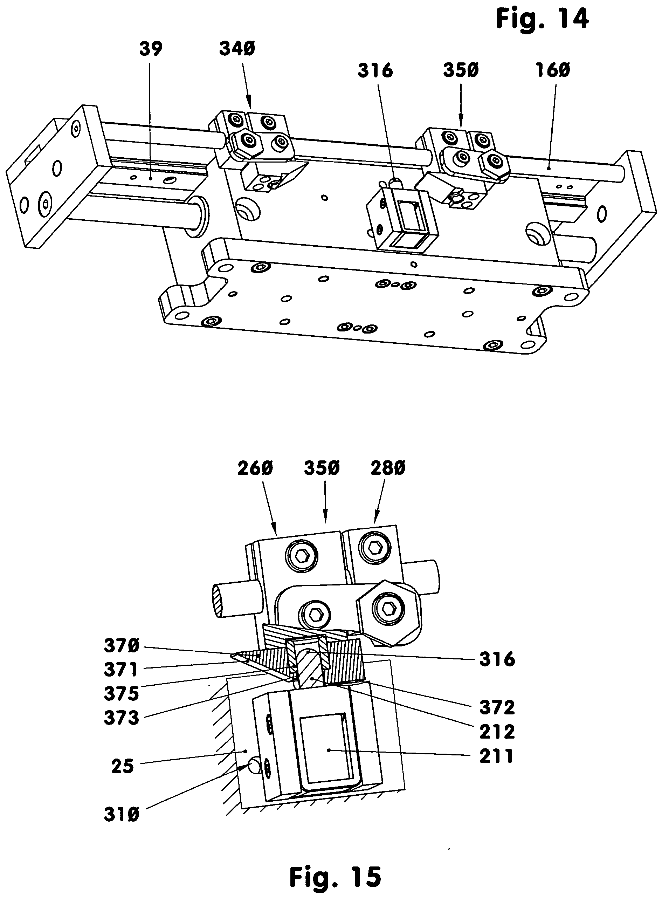

In der Variante nach den Figuren 14 und 15 dient als beweglicher Sperrer ein an der Gehäusehaube (20) angeordneter Zuganker (212) eines Hubmagnets (211), während am Schlitten (30) für jede Schlittenendlage ein z.B. feineinstellbares Sperrstück (370) an einer zum Läufer (51) parallelen Anschlagträgerstange (160) angeordnet ist. Der Hubmagnet (211) ist Teil des aktiven Halteaggregats (310). Das jeweilige Sperrstück (370) hat die Form eines mit einer Rastbohrung (373) ausgestatteten Keiles und ist jeweils an der Unterseite eines Rastklemmschuhes (260) befestigt. Der jeweilige Keil (370) hat eine Keilfläche (371), die mit der Schlittenverfahrrichtung z.B. einen Winkel von 30 Winkelgraden einschließt. Seine jeweilige Keilfläche (371) hat eine Flächennormale, die von der Anschlagträgerstange (160) wegweist, wobei sie zugleich im Wesentlichen in Richtung Hubmagnet (211) hin orientiert ist.

Die jeweilige Keilfläche (371) geht z.B. in der Mitte des Keils (370) in eine horizontale Fläche (372) über, die parallel zur Deckfläche (21) der Gehäusehaube (20) orientiert ist. In der Übergangszone zwischen den Flächen (371) und (372) befindet sich im Keil (370) eine zur Fläche (372) senkrechte Rastbohrung (373). In diese Rastbohrung (373), die nach Figur 15 mit einer Gleithülse (375) ausgestattet ist, rastet der Zuganker (212) ein, sobald der Schlitten (30) eine seiner Endlagen erreicht hat. Die Gleithülse (375) ist z.B. aus Messing oder einer Messinglegierung gefertigt.

Vor dem Einrasten wird der Zuganker (212) durch das Entlanggleiten an der entsprechenden Keilfläche (371) des Keils (370) in sein Gehäuse hineingeschoben, um erst beim Erreichen der Endlage in seine Sperrposition mittels Federkraft auszufahren.

Der Zuganker (212) des Hubmagnets (211) ragt dazu im stromlosen Zustand ca. 10 mm aus dem Hubmagnetgehäuse heraus. Den Ausfahrhub bedingt z.B. eine im Hubmagnetgehäuse integrierte Druckfeder. Das freie Ende des Zugankers (212) stellt im Ausführungsbeispiel eine Halbkugel (316) dar.

Um zwischen den Keilen (370) und dem Zuganker (212) anstelle von Gleitreibung in der Kontaktfläche Rollreibung vorzusehen, werden zwei Lösungen vorgeschlagen. In einer ersten Lösung wird die Gleithülse (375) durch eine Kugelbüchse bzw. ein Linearkugellager ersetzt. In einer zweiten Lösung kann die Halbkugel (316) des Zugankers (212) z.B. durch ein gabelförmiges Ende ersetzt werden, das ein Rillenkugellager auf einer Achse lagert. Entsprechend wird die Rastbohrung (373) des Keils (370) durch eine passende Rastkerbe ersetzt.

Zur Aufhebung der Endlagenhalterung wird der Hubmagnet (211) bestromt, um den Zuganker (212) aus der Rastbohrung (373) oder der Rastkerbe zu ziehen.

Um den Hub des Schlittens (30) schnell und automatisch mittels einer Steuer- oder Regelung ändern zu können, kann mindestens eines der Halteglieder (151, 152, 153, 154) am Schlitten (30) parallel zur Mittellinie (49) elektromotorisch verschiebbar angeordnet werden. Beispielsweise wird das Halteglied mittels eines Schraubgetriebes verstellt, wobei, wenn eine variable Verstellung gewünscht ist, die Verstellvorrichtung eine Lageregelung aufweist. Alternativ kann auch das Halteaggregat (110, 210, 310) an der Schlittenführung (10) verschoben werden.

### Bezugszeichenliste:

- 10: Schlittenführung, Führungsgehäuse, ortsfest
- 11: Grundplatte
- 12: Befestigungslaschen

- 20: Gehäusehaube
- 21: Deckfläche
- 22: Einfräsung
- 23: Stirnfläche, vorn
- 24: Stirnfläche, hinten
- 25: Vorderseite, Seitenfläche
- 26: Durchgangsbohrung
- 27: Gleitlagerhülsen
- 29: Kugelumlaufschuhe

- 30: Schlitten
- 31: Trägerplatte
- 32: Längsnut
- 35: Stirnplatte, vorn
- 36: Stirnplatte, hinten
- 39: Führungsschiene

- 40: Linearmotor, Schlittenantrieb
- 41: Stator, ortsfest
- 42: Statorgehäuse
- 43: Bohrung, zentral
- 45: Spulen der 1. Phase
- 46: Spulen der 2. Phase
- 49: Mittellinie

- 51: Läufer
- 52: Edelstahlrohr
- 53: Permanentmagnete
- 54: Weicheisenbolzen

- 91, 92: Zweifingergreifer
- 93: Greiferträger

- 110: Halteaggregat mit Permanentmagnet, aktiv
- 111,: untere Polplatte
- 113: Längssteg, lang; Polsteg
- 115, 116: Ankuppelbereiche, Endbereiche, Pole
- 117: Längssteg, kurz; Magnethaltesteg
- 118: Quersteg
- 119: Verbreiterung

- 121: obere Polplatte
- 125, 126: Ankuppelbereiche, Endbereiche, Pole
- 127: Bohrungen mit Zylindersenkung
- 128: Bohrungen für Stifte

- 130: Spule
- 131: Spulenkörper
- 132: Wicklung
- 133: Spalt
- 135: Permanentmagnet, quaderförmig

- 141: Stifte
- 142: Zylinderschrauben
- 143: Schraubenkopf
- 144: Gehäuse

- 151, 152: Halteglied, lang, passiv; Einschraubbolzen
- 153, 154: Halteglied, kurz, passiv; Einschraubbolzen
- 155: Scheibe, Anker
- 156: Gewinde
- 157: Kontermuttern

- 160: Anschlagträgerstange
- 161, 162: Klemmelemente, Klemmschuh
- 163: Klemmschlitz
- 164: Klemmschraube
- 167, 168: Teleskopschutzrohre, links, rechts

- 170: Halteglied mit Permanentmagnet
- 171, 172: Polstäbe, unten, oben
- 173: Permanentmagnet

- 180: Halteaggregat mit Permanentmagnet, aktiv
- 181, 182: Polstäbe, Polplatten, unten, oben
- 183: Permanentmagnet
- 184: Nordpol
- 185: Südpol
- 186-189: Spulen

- 191, 193: Pole von (181)
- 192, 194: Pole von (182)
- 197: Montageplatten

- 210: Halteaggregat mit Schwenkhebel, aktiv; Rastgesperre
- 211: Hubmagnet
- 212: Zuganker
- 213: Gabelzinken
- 214: Bolzen
- 215: Schraubendruckfeder

- 219: Träger

- 220: Schwenkhebel, Sperrer
- 221: Rastnut, Rastkerbe
- 223, 224: Rastrampen, links, rechts
- 227: Schwenkbolzen

- 240, 250: Halteglied, passiv

- 260: Rastklemmschuh
- 261: Querbohrung
- 262: Klemmschlitz
- 263: Klemmbohrung
- 264: Klemmschraube

- 270: Rastbolzen, Sperrstück, Halteglied
- 271: Rastschlitz
- 273: Gewindebohrung
- 274: Achse
- 275: Rillenkugellager mit 2 Dichtscheiben, Sperrstück
- 277: Gelenkschraube, Passschraube

- 280: Justierklemmschuh
- 281: Exzenterhülse
- 284: Klemmschraube
- 287: Gelenkschraube, Passschraube

- 290: Koppellasche
- 310: Halteaggregat für Keile, aktiv, Rastgesperre
- 316: Halbkugel

- 340, 350: Halteglieder

- 370: Keil, Sperrstück
- 371: Keilfläche
- 372: Horizontalfläche
- 373: Rastbohrung
- 375: Gleithülse

## Patentansprüche

1. Elektrisch angetriebene Linearachse mit einer Endlagenhaltevorrichtung, wobei die Linearachse einen an einer Schlittenführung (10) gelagerten verfahrbaren Schlitten (30) aufweist,
- wobei zwischen deren Schlitten (30) und deren Schlittenführung (10) mindestens ein Halteaggregat (110, 210, 310) und mindestens ein Halteglied (151-154, 170, 240, 250, 340, 350) angeordnet ist und
- wobei in mindestens einer festen oder einstellbaren Schlittenendlage mindestens ein Halteglied (151-154; 170, 240, 250, 340, 350) am Halteaggregat (110; 210, 310) kraft und/oder formschlüssig - ohne extern zugeführte Fremdenergie - ankuppelbar ist, **dadurch gekennzeichnet,**
- **dass** bei einer kraftschlüssigen Kupplung das Halteglied (151-154, 170) am Halteaggregat (110) mittels eines Permanentmagnetfelds ankuppelbar ist und das Halteglied (151-154, 170) vom Halteaggregat (110) mittels eines elektrisch erzeugten Magnetfelds abkuppelbar ist und
- **dass** bei einer formschlüssigen Kupplung das Halteglied (240, 250, 340, 350) vom Halteaggregat (210, 310) piezoelektrisch oder durch Nutzung eines beheizbaren Formgedächtniselements abkuppelbar ist.

2. Endlagenhaltevorrichtung nach Anspruch 1, **dadurch gekennzeichnet, dass** das Halteaggregat (110, 210, 310) zwei sich einander gegenüberliegende Polplatten (111, 121) aufweist, zwischen denen mindestens ein Permanentmagnet (135) und mindestens eine elektrische Spule (130) angeordnet ist.

3. Endlagenhaltevorrichtung gemäß Anspruch 2, **dadurch gekennzeichnet, dass** jede Polplatte (111, 121) mindestens einen Ankuppelbereich (115, 116; 125, 126) als Pole zum Ankuppeln eines Haltegliedes (151-154) aufweist, wobei zwischen den Ankuppelbereichen (115, 116; 125, 126) der beiden Polplatten (111, 121) und dem Permanentmagnet (135) mindestens eine elektrische Spule (130) angeordnet ist.

4. Endlagenhaltevorrichtung gemäß Anspruch 3, **dadurch gekennzeichnet, dass** zwischen den Polplatten (111, 121) und zwischen dem Permanentmagnet (135) und den Ankuppelbereichen (115, 116; 125, 126) mindestens einen Spule (130) angeordnet ist, deren Magnetfeld parallel zum Magnetfeld des Permanentmagnets (135) orientiert ist.

5. Endlagenhaltevorrichtung gemäß Anspruch 4, **dadurch gekennzeichnet, dass** bei einem Bestromen der Spule (130) zum Entmagnetisieren der Ankuppelbereiche (115, 116; 125, 126) an jeder Polplatte (111, 121) der Permanentmagnet (135) und die Spule (130) mit der gleichen Polung anliegen.

6. Endlagenhaltevorrichtung nach mindestens einem der vorangegangenen Ansprüche, **dadurch gekennzeichnet, dass** jeder Polstab (181, 182) zwischen dem einen Ankuppelbereich (191-194) und dem nächstgelegenen Permanentmagnet (183) eine elektrische Spule (186-189) trägt, deren Magnetfelder parallel zu den Magnetfeldlinien in dem Polstab (181, 182) - wie sie sich ohne Bestromung der Spule (186-189) einstellen - orientiert sind, wobei die benachbarten Pole der bestromten Spulen (186-189) und des Permanentmagneten (183) die gleiche Polarität haben.

7. Endlagenhaltevorrichtung nach mindestens einem der vorangegangenen Ansprüche, **dadurch gekennzeichnet, dass** die Polplatten (111, 121; 181, 182) eines jeden Halteaggregats (110, 180) - zumindest örtlich - bereichsweise aus einem ferromagnetischen Werkstoff oder einer ferromagnetischen Legierung gefertigt sind.

8. Endlagenhaltevorrichtung nach mindestens einem der vorangegangenen Ansprüche, **dadurch gekennzeichnet, dass** die kurzzeitige Bestromung jeder verwendeten elektrischen Spule (130) oder Spulen (186-189) in Kombination mit den in die Spule (130) oder Spulen (186-189) hineinragenden oder darin liegenden Bereichen der Polplatten (111, 121; 181, 182) eine Flussdichte erreicht, die größer ist als die Flussdichte des oder der Permanentmagneten (135, 183).

## Claims

1. An electrically powered linear axis with an end position holding device, the linear axis having a movable carriage (30) mounted on a carriage guide (10),
- wherein at least one holding assembly (110, 210, 310) and at least one holding member (151-154, 170, 240, 250, 340, 350) are arranged between the carriage (30) and the carriage guide (10) thereof, and
- wherein, in at least one fixed or adjustable carriage end position, at least one holding member (151-154; 170, 240, 250, 340, 350) can be coupled to the holding assembly (110; 210, 310) in a force- or form-fitting manner without: external energy supplied from the outside,
**characterised in that**
- in the case of a force-fitting coupling, the holding member (151-154, 170) can be coupled to the holding assembly (110) by means of a permanent magnetic field, and the holding member (151-154, 170) can be decoupled from the holding assembly (110) by means of an electrically generated magnetic field, and
- in the case of a form-fitting coupling, the holding member (240, 250, 340, 350) can be decoupled from the holding assembly (210, 310) piezoelectrically or by using a heatable shape memory element.

2. The end position holding device according to Claim 1, **characterised in that**
the holding assembly (110, 210, 310) has two mutually opposing pole plates (111, 121), between which at least one permanent magnet (135) and at least one electrical coil (130) are arranged.

3. The end position holding device according to Claim 2, **characterised in that**
each pole plate (111, 121) has at least one coupling region (115, 116; 125, 126) as a pole for coupling a holding member (151-154), wherein at least one electrical coil (130) is arranged between the coupling regions (115, 116; 125, 126) of the two pole plates (111, 121) and the permanent magnet (135).

4. The end position holding device according to Claim 3, **characterised in that**
between the pole plates (111, 121) and between the permanent magnet (135) and the coupling regions (115, 116; 125, 126) there is at least one coil (130), the magnetic field of which is oriented parallel to the magnetic field of the permanent magnet (135).

5. The end position holding device according to Claim 4, **characterised in that**
when the coil (130) is energised to demagnetise the coupling regions (115, 116; 125, 126), the permanent magnet (135) and the coil (130) bear against each pole plate (111, 121) with the same polarity.

6. The end position holding device according to at least one of the preceding claims,
**characterised in that**
each pole bar (181, 182) carries, between one coupling region (191-194) and the closest permanent magnet (183), an electrical coil (186-189), the magnetic fields of which are oriented parallel to the magnetic field lines in the pole bar (181, 182), as they orient themselves when the coil (186-189) is not energised, wherein the adjacent poles of the energised coils (186-189) and of the permanent magnet (183) have the same polarity.

7. The end position holding device according to at least one of the preceding claims,
**characterised in that**
the pole plates (111, 121; 181, 182) of each holding assembly (110, 180) are produced in some regions, at least locally, from a ferromagnetic material or a ferromagnetic alloy.

8. The end position holding device according to at least one of the preceding claims,
**characterised in that**
the brief energisation of each electrical coil (130) or coils (186-189) used in combination with the regions of the pole plates (111, 121; 181, 182) protruding into or lying in the coil (130) or coils (186-189) achieves a flux density which is greater than the flux density of the permanent magnet(s) (135, 183).

## Revendications

1. Axe linéaire à entraînement électrique, pourvu d'un dispositif de retenue dans la position finale, l'axe linéaire comportant un chariot (30) déplaçable, logé sur un guidage de chariot (10),
- entre son chariot (30) et son guidage de chariot (10) étant placés au moins un agrégat de retenue (110, 210, 310) et au moins un organe de retenue (151 à 154, 170, 240, 250, 340, 350) et
- dans au moins une position d'extrémité fixe ou réglable du chariot, au moins un organe de retenue (151 à 154 ; 170, 240, 250, 340, 350) étant susceptible d'être accouplé avec l'agrégat de retenue (110 ; 210, 310) par complémentarité de force et / ou de forme sans apport d'énergie extérieure, **caractérisé en ce que**
- dans le cas d'un accouplement par complémentarité de force, l'organe de retenue (151 à 154, 170) est susceptible d'être accouplé avec l'agrégat de retenue (110) au moyen d'un champ magnétique permanent et **en ce que** l'organe de retenue (151 à 154, 170) peut se désaccoupler de l'agrégat de retenue (110) au moyen d'un champ magnétique généré par voie électrique et
- dans le cas d'un accouplement par complémentarité de forme, l'organe de retenue (240, 250, 340, 350) peut se désaccoupler de l'agrégat de retenue (210, 310) par voie piézoélectrique ou par l'utilisation d'un élément à mémoire de forme, susceptible d'être chauffé.

2. Dispositif de retenue dans la position finale selon la revendication 1, **caractérisé en ce que** l'agrégat de retenue (110, 210, 310) comporte deux plaques polaires (111, 121) mutuellement opposées, entre lesquelles sont placés au moins un aimant permanent (135) et au moins une bobine (130) électrique.

3. Dispositif de retenue dans la position finale selon la revendication 2, **caractérisé en ce que** chaque plaque polaire (111, 121) comporte au moins une zone d'accouplement (115, 116 ; 125, 126) en tant que pôles destinés à accoupler un organe de retenue (151 à 154), entre les zones d'accouplement (115, 116 ; 125, 126) des deux plaques polaires (111, 121) et l'aimant permanent (135) étant placée au moins une bobine (130) électrique.

4. Dispositif de retenue dans la position finale selon la revendication 3, **caractérisé en ce qu'**entre les plaques polaires (111, 121) et entre l'aimant permanent (135) et les zones d'accouplement (115, 116 ; 125, 126) est placée au moins une bobine (130) dont le champ magnétique est orienté à la parallèle du champ magnétique de l'aimant permanent (135).

5. Dispositif de retenue dans la position finale selon la revendication 4, **caractérisé en ce que** lors d'une alimentation en courant de la bobine (130) afin de démagnétiser les zones d'accouplement (115, 116 ; 125, 126) sur chaque plaque polaire (111, 121) sont appliqués l'aimant permanent (135) et la bobine (130) avec la même polarisation.

6. Dispositif de retenue dans la position finale selon au moins l'une quelconque des revendications précédentes, **caractérisé en ce que** chaque barre polaire (181, 182) entre l'une zone d'accouplement (191 à 194) et l'aimant permanent (183) le plus proche porte une bobine (186 à 189) électrique, dont les champs magnétiques sont orientés à la parallèle des lignes de champ magnétique dans la barre polaire (181, 182) telles qu'elles s'installent sans alimentation électrique de la bobine (186 à 189), les pôles voisins des bobines (186 à 189) alimentées en électricité et de l'aimant permanent (183) ayant la même polarité.

7. Dispositif de retenue dans la position finale selon au moins l'une quelconque des revendications précédentes, **caractérisé en ce que** les plaques polaires (111, 121 ; 181, 182) de chaque agrégat de retenue (110, 180) sont fabriquées au moins localement par endroits en une matière ferromagnétique ou en un alliage ferromagnétique.

8. Dispositif de retenue dans la position finale selon au moins l'une quelconque des revendications précédentes, **caractérisé en ce que** l'alimentation électrique brève de chaque bobine (130) électrique utilisée ou des bobines (186 à 189), en association avec les zones des plaques polaires (111, 121 ; 181, 182) saillant dans la bobine (130) ou les bobines (186-189) ou situées en leur intérieur atteint une densité de flux qui est supérieure à la densité de flux du ou des aimants permanents (135, 183).
